# EUROPEAN PATENT APPLICATION

(11) **EP 1 422 921 A1**
(43) Date of publication of application: **26.05.2004**
(21) Application number: 02026306.7
(22) Date of filing: 20.11.2002
(51) Int. Cl.: H04N 1/028

(54) **Flat bed scanner**

(71) Applicant: Portable Peripheral Co., Ltd., Hsinchu (TW)
(72) Inventor: Lin, Fang, Hsinchu (TW)
(74) Representative: Kador & Partner

(57) **Abstract**

A flat bed scanner includes a housing inside which an optic detection system including a charge coupling device is mounted. A light-transmitting platform is positioned above the housing and has a top face for supporting a document to be scanned. A light source is mounted to the housing for projecting a light beam toward the platform whereby the light beam transmits through the platform and is reflected by the document into the housing to be detected by the charge coupling device of the optic detection system. The optic detection system receives the reflected light beam and converts the light beam into a corresponding electrical signal. The light source includes an elongate light guide having opposite ends connected by a side surface. At least one light emitting diode is mounted to one of the ends and emits a light into the light guide whereby the light is guided to project through the side surface of the light guide toward the platform. A casing encases the light guide and forms a slot corresponding to the side surface. The light beam goes through the slot toward the platform for scanning the document supported on the platform. The casing may have a reflective inside surface of completely guiding the light from the light emitting diode toward the platform.

## Description

### FIELD OF THE INVENTION

The present invention relates generally to a document scanner, and in particular to a flat bed scanner operating with light emitting diode (LED) that is driven by low voltage.

### BACKGROUND OF THE INVENTION

Document scanners have been widely used to read and store documents for file management and transmission. A document scanner is comprised of a light source projecting a scanning beam to a document to be scanned. The scanning beam is reflected by or transmitting through the document and then received by optic detection devices which converts the reflected beam into electrical signals for further processing. An optic detection device that is commonly employed in the document scanner is a charge coupling device (CCD).

A conventional scanner, which is called "flat bed" scanner, comprises a cold cathode fluorescent lamp (CCFL) as the light source. The CCFL is capable to provide high brightness for scanning operation. However, the CCFL is operated with high voltage. This leads to the following disadvantages:

(1) A circuit for up-transformation of voltage is required for providing the high voltage to drive the CCFL. Costs of the flat bed scanner are thus increased.

(2) In addition, safety is also a concern for the high voltage that drives the CCFL. Additional expense for safety increases the overall costs of the flat bed scanner. Further, the up-transformation induces noise to the scanning operation of the flat bed scanner and thus adversely affects the scanning result.

(3) The up-transformation causes electro-magnetic interference to the electronics of the flat bed scanner and may thus damage the flat bed scanner.

(4) The regular power consumption of the CCFL is around 2.5W, which makes it impossible to use the power interface regularly devised in a personal computer. Thus, an additional power adaptor is required. This also increases the costs.

It is thus desired to have a flat bed scanner that overcomes the above problems.

### SUMMARY OF THE INVENTION

An object of the present invention is to provide a flat bed scanner that comprises a light source that does not require up-transformation of voltage applied thereto.

Another object of the present invention is to provide a flat bed scanner that comprises a light source operated with low voltage and thus low costs.

A further object of the present invention is to provide a flat bed scanner that comprises a light source operated with low voltage and thus requiring no safety measure for operation safety purposes.

A further object of the present invention is to provide a flat bed scanner that comprises a light source requiring no up-transformation of voltage applied thereto whereby no noise is induced by the up-transformation.

Yet a further object of the present invention is to provide a flat bed scanner requiring no up-transformation of voltage and thus eliminating damage and interference caused by the up-transformation.

To achieve the above object, in accordance with the present invention, there is provided a flat bed scanner comprising a housing inside which an optic detection system including a charge coupling device is mounted. A light-transmitting platform is positioned above the housing and has a top face for supporting a document to be scanned. A light source is mounted to the housing for projecting a light beam toward the platform whereby the light beam transmits through the platform and is reflected by the document into the housing to be detected by the charge coupling device of the optic detection system. The optic detection system receives the reflected light beam and converts the light beam into a corresponding electrical signal. The light source comprises an elongate light guide having opposite ends connected by a side surface. At least one light emitting diode is mounted to one of the ends and emits a light into the light guide whereby the light is guided to project through the side surface of the light guide toward the platform. A casing encases the light guide and forms a slot corresponding to the side surface. The light beam goes through the slot toward the platform for scanning the document supported on the platform. The casing may have a reflective inside surface of completely guiding the light from the light emitting diode toward the platform.

### BRIEF DESCRIPTION OF THE DRAWINGS

The present invention will be apparent to those skilled in the art by reading the following description of a preferred embodiment thereof, with reference to the attached drawings, in which:
Figure 1 is a perspective view of a flat bed scanner constructed in accordance with the present invention with inside details shown with phantom lines;
Figure 2 is a cross-sectional view of the flat bed scanner of the present invention; and
Figure 3 is a schematic block diagram of a control circuit of the flat bed scanner of the present invention.

### DETAILED DESCRIPTION OF THE INVENTION

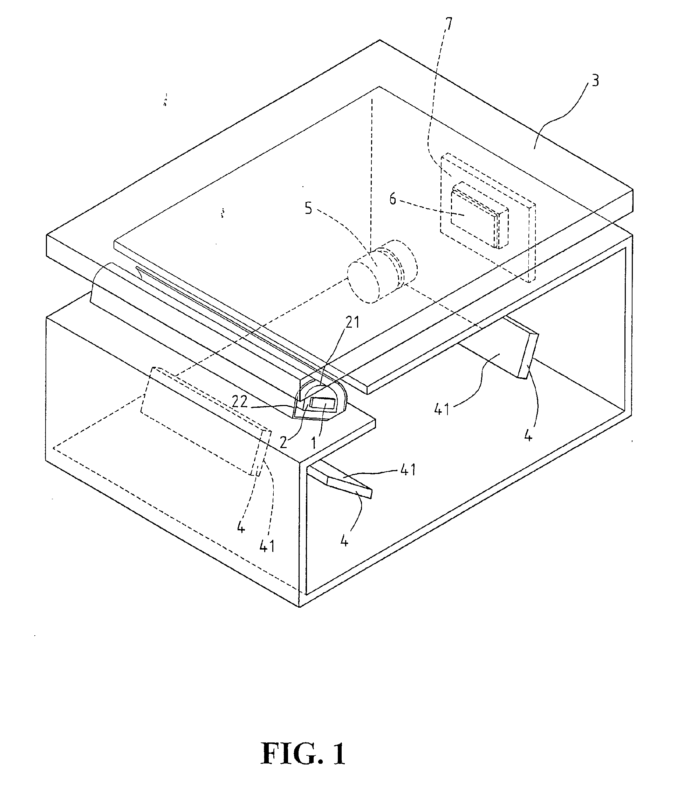

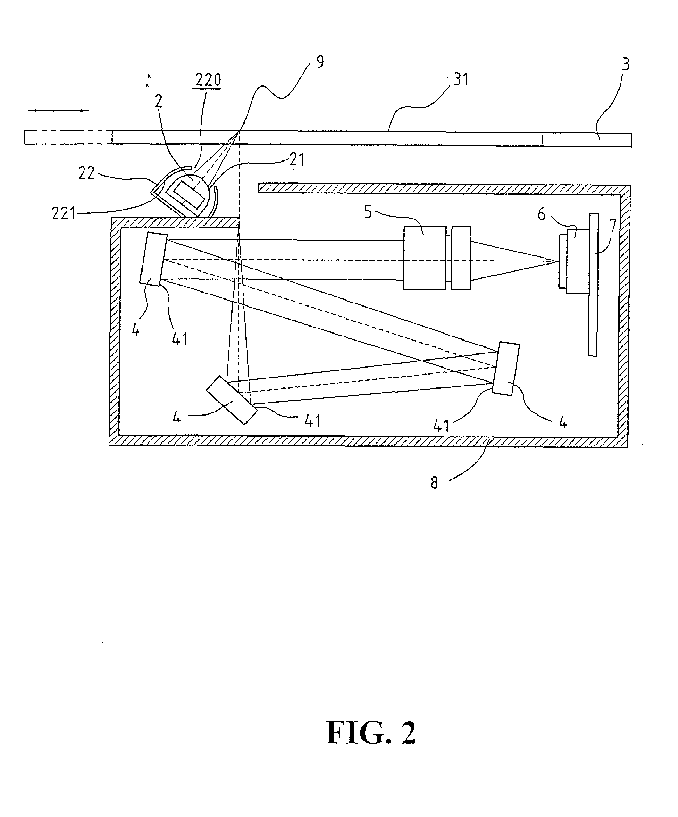

With reference to the drawings and in particular to Figures 1 and 2, a flat bed scanner constructed in accordance with the present invention comprises a housing 8 and a light-transmitting platform 3 positioned above and supported on the housing 8. The platform 3 has a top face 31 on which a document to (not shown) to be scanned is positioned. A light source (not labeled) comprising a light emitting diode (LED) 1 is mounted to the housing 8 for projecting a light beam toward the platform 3. The light beam transmits through the platform 3 and reflected by the document positioned on the platform 3 as indicated by reference numeral 9 and induces an optic signal that represents patterns formed on the document. The reflected light beam goes into the housing 8 and directed by reflective surfaces 41 of reflection devices 4 toward a lens 5 which focus the light beam onto an optic detector 6, such as a charge coupling device (CCD), whereby the optic signal contained in the light beam is converted into corresponding electrical signal. The CCD 6 is mounted to and in electrical connection with a circuit board 7 that forms a control circuit comprising a scanner control chip for receiving and processing the electrical signal.

The light source comprises an elongate light guide 2 having opposite lengthwise ends connected by a side surface 21. The LED 1 is mounted to one of the lengthwise ends of the light guide 2 and generates a light, such as a white light, transmitting into the light guide 2. The light is reflected and refracted inside the light guide 2 and eventually projected through the side surface 21 of the light guide 2. The light guide 2 is encased in a casing 22 which forms a slot 220 coextensive with the light guide 2 for the transmission of the light beam projected through the side surface 2 of the light guide 2. The casing 22 has a reflective inside surface 221. A portion of the light projected from the side surface 21 that is incident onto the side surface 21 of the casing 22 is reflected and eventually goes out of the casing 22 through the slot 220 and thus guided toward the platform 3 in a given direction.

The platform 3 is made of highly light-transmissive material to allow the light beam from the light source to transmit therethrough. The platform 3 is coupled to a driving system which may comprise a motor for moving the platform 3 fro and back thereby moving the document to be scanned with respect to the light source to allow completely scanning of the document.

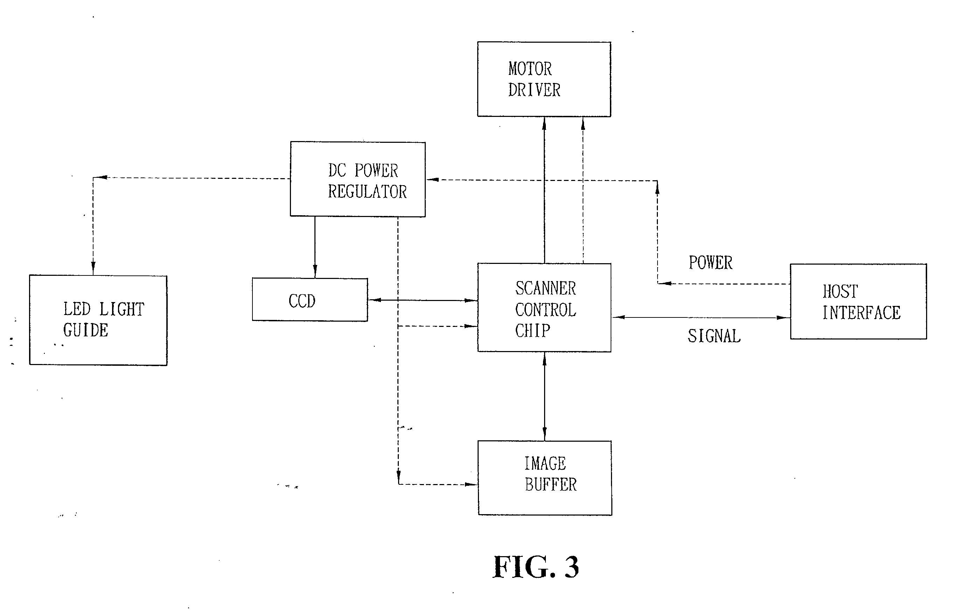

Also referring to Figure 3, the operation of the flat bed scanner of the present invention is that a host interface (not shown), such as a computer to which the flat bed scanner is connected, activates power of the flat bed scanner to supply power to a DC power regulator which initialize the LED light guide 2, the CCD 6 and the scanner control chip of the control circuit. To carry out a scanning operation, the host interface issues a signal to the scanner control chip which controls the movement of the platform 3 via a motor driver that drives the motor mechanically coupled to the platform 3 and actuates the LED light source to emit a light beam. The light beam is reflected by the document positioned on the platform 3 and received by the CCD 6. The CCD 6 converts the optic signal into electrical signal that is received by the control circuit of the circuit board 7. The electrical signal is stored in an image buffer for further processing. Alternatively, the electrical signal is directly output by the host interface.

For color applications, the light source may comprise a white light LED 1 mounted to a lengthwise end of the light guide 2 and the photo detector 6 may comprise a charge coupling device that is capable to handle color signal. Alternatively, the light source may comprise three LEDs 1 respectively associated with red light, green light and blue light. The LEDs 1 are mounted to the lengthwise end of the light guide 2.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A scanner comprising:
a housing;
a light-transmitting platform positioned above the housing for supporting a document to be scanned;
a light source projecting a light beam toward the platform, the light beam transmitting through the platform and adapted to be reflected by the document into the housing; and
an optic detection system arranged inside the housing to receive the reflected light beam and convert the light beam into a corresponding electrical signal;
wherein the light source comprises a light emitting diode emitting the light beam which is guided toward the light-transmitting platform.

2. The scanner as claimed in claim 1, wherein the light source comprises a light guide having an end to which the light emitting diode is mounted, the light emitted from the light emitting diode transmitting into the light guide and being directed through a side surface of the light guide toward the light-transmitting platform.

3. The scanner as claimed in claim 2, wherein the light source comprises a casing encasing the light guide, the casing having a slot through which the light beam goes toward the light-transmitting platform.

4. The scanner as claimed in claim 3, wherein the casing has a reflective inside surface.

5. The scanner as claimed in claim 1, wherein the light generated by the light emitting diode is white light.

6. The scanner as claimed in claim 1, wherein the light source comprises three light emitting diodes respectively associated with red light, green light and blue light.

7. The scanner as claimed in claim 1, wherein the optic detection system comprises at least one reflector that directs the light beam toward a charge coupling device, the charge coupling device being connected to a control circuit for converting the light beam into the electrical signal.

8. The scanner as claimed in claim 7, wherein the control circuit is formed on a circuit board and the charge coupling device is mounted to the circuit board.

9. The scanner as claimed in claim 7, wherein the optic detection system comprises a lens for focusing the light beam onto the charge coupling device.

10. The scanner as claimed in Claim 1, wherein the platform is movable with respect to the light source.
